(19) Europäisches Patentamt / European Patent Office / Office européen des brevets

(11) **EP 3 716 623 A1**

(12) **DEMANDE DE BREVET EUROPEEN**

(43) Date de publication:
**30.09.2020   Bulletin 2020/40**

(21) Numéro de dépôt: **20175631.9**

(22) Date de dépôt: **23.02.2012**

(51) Int Cl.:
*H04N 19/13* (2014.01)          *H04N 19/174* (2014.01)
*H04N 19/184* (2014.01)          *H04N 19/436* (2014.01)
*H04N 19/61* (2014.01)

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **07.03.2011   FR 1151849**

(62) Numéro(s) de document de la (des) demande(s) initiale(s) en application de l'article 76 CBE:
**12711927.9 / 2 684 366**

(71) Demandeur: **Dolby International AB**
**1101 CN  Amsterdam Zuidoost (NL)**

(72) Inventeurs:
• **HENRY, Felix**
  **35760 SAINT GREGOIRE (FR)**
• **PATEUX, Stéphane**
  **35700 Rennes (FR)**

(74) Mandataire: **Peterreins Schley**
**Patent- und Rechtsanwälte PartG mbB**
**Hermann-Sack-Strasse 3**
**80331 München (DE)**

Remarques:
Cette demande a été déposée le 20/05/2020 comme demande divisionnaire de la demande mentionnée sous le code INID 62.

(54)  **PROCÉDÉ DE DÉCODAGE D'IMAGES**

(57)     L'invention concerne un procédé de décodage d'un flux représentatif d'une image codée, comprenant les étapes de: identification dans l'image d'une pluralité de sous-ensembles de blocs à être décodés, décodage de parties de flux associées à chacun des sous-ensembles de blocs, l'étape de décodage comprenant, pour un bloc courant d'un sous-ensemble considéré, les sous-étapes de:

tester si le bloc courant est le premier bloc des sous-ensembles de blocs dans l'ordre de parcours;

si le bloc courant est le premier bloc, le procédé comprend en outre:

lecture dans une mémoire tampon d'une probabilité d'apparition de symbole qui a été calculée pour un bloc prédéterminé décodé d'au moins un autre sous-ensemble, le bloc prédéterminé étant deuxième dans l'ordre de parcours de l'autre sous-ensemble; et

décodage entropique du premier bloc à partir de la probabilité d'apparition de symbole qui a été calculée pour le deuxième bloc dans l'ordre de parcours de l'autre sous-ensemble;

si le bloc courant n'est pas le premier bloc du sous-ensemble, la probabilité d'apparition de symbole est celle qui a été calculée pour au moins un bloc décodé appartenant au même sous-ensemble.

**Fig. 5A**

## Description

### Domaine de l'invention

La présente invention se rapporte de manière générale au domaine du traitement d'images, et plus précisément au codage et au décodage d'images numériques et de séquences d'images numériques.

L'invention peut ainsi, notamment, s'appliquer au codage vidéo mis en œuvre dans les codeurs vidéo actuels (MPEG, H.264, etc) ou à venir (ITU-T/VCEG (H.265) ou ISO/MPEG (HVC).

### Arrière-plan de l'invention

Les codeurs vidéo actuels (MPEG, H264, ...) utilisent une représentation par blocs de la séquence vidéo. Les images sont découpées en macro-blocs, chaque macro-bloc est lui-même découpé en blocs et chaque bloc, ou macro-bloc, est codé par prédiction intra-images ou inter-images. Ainsi, certaines images sont codées par prédiction spatiale (prédiction intra), tandis que d'autres images sont codées par prédiction temporelle (prédiction inter) par rapport à une ou plusieurs images de référence codées-décodées, à l'aide d'une compensation en mouvement connue par l'homme de l'art. De plus, pour chaque bloc peut être codé un bloc résiduel correspondant au bloc original diminué d'une prédiction. Les coefficients de ce bloc sont quantifiés après une éventuelle transformation, puis codés par un codeur entropique.

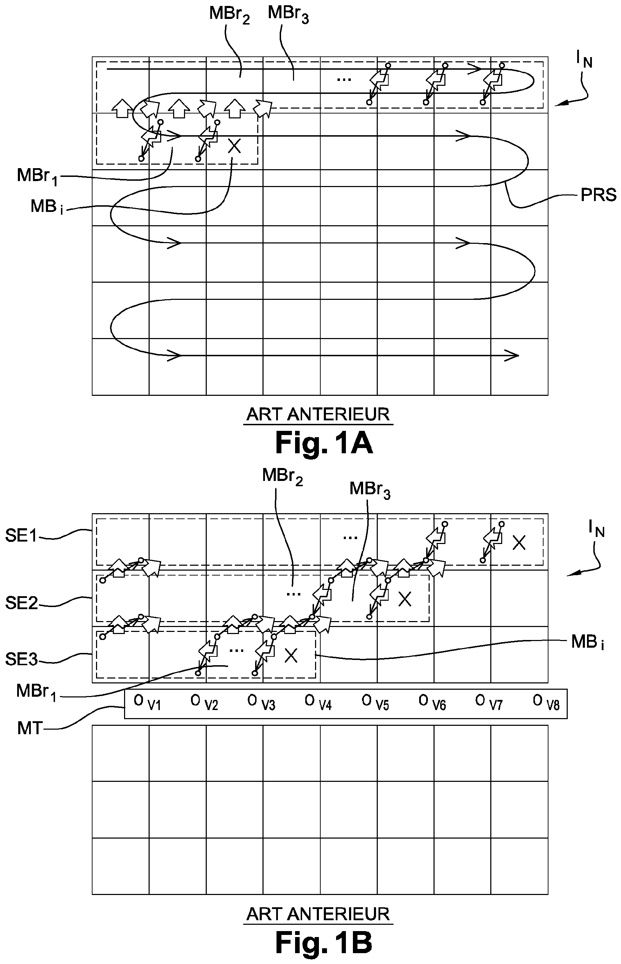

La prédiction intra et la prédiction inter nécessitent que certains blocs qui ont été précédemment codés et décodés soient disponibles, de façon à être utilisés, aussi bien au décodeur qu'au codeur, pour prédire le bloc courant. Un exemple schématique d'un tel codage prédictif est représenté à la **figure 1A,** dans laquelle une image $I_N$ est divisée en blocs, un bloc courant $MB_i$ de cette image étant soumis à un codage prédictif par rapport à un nombre prédéterminé de trois blocs $MBr_1$, $MBr_2$ et $MBr_3$ précédemment codés et décodés, tels que désignés par les flèches grisées. Les trois blocs précités comprennent spécifiquement le bloc $MBr_1$ situé immédiatement à gauche du bloc courant $MB_i$, et les deux blocs $MBr_2$ et $MBr_3$ situés respectivement immédiatement au-dessus et à droite au-dessus du bloc courant $MB_i$.

On s'intéresse ici plus particulièrement au codeur entropique. Le codeur entropique encode les informations suivant leur ordre d'arrivée. Typiquement un parcours ligne par ligne des blocs est réalisé, de type « raster-scan », comme illustré sur la **figure 1A** par la référence PRS, en partant du bloc en haut à gauche de l'image. Pour chaque bloc, les différentes informations nécessaires à la représentation du bloc (type de bloc, mode de prédiction, coefficients de résidu, ...) sont envoyées séquentiellement au codeur entropique.

On connaît déjà un codeur arithmétique efficace et de complexité raisonnable, appelé « CABAC » ("Context Adaptive Binary Arithmetic Coder" en anglais), introduit dans le standard de compression AVC (aussi connu sous le nom de ISO-MPEG4 partie 10 et ITU-T H.264).

Ce codeur entropique met en œuvre différents concepts :

- le codage arithmétique : le codeur, tel que décrit initialement dans le document J. Rissanen and G. G. Langdon Jr, "Universal modeling and coding," IEEE Trans. Inform. Theory, vol. IT-27, pp. 12-23, Jan. 1981, utilise, pour coder un symbole, une probabilité d'apparition de ce symbole ;
- l'adaptation au contexte : il s'agit ici d'adapter la probabilité d'apparition des symboles à coder. D'une part, un apprentissage à la volée est réalisé. D'autre part, suivant l'état des informations préalablement codées, un contexte spécifique est utilisé pour le codage. A chaque contexte correspond une probabilité d'apparition propre du symbole. Par exemple un contexte correspond à un type de symbole codé (la représentation d'un coefficient d'un résidu, signalisation de mode de codage, ...) suivant une configuration donnée, ou un état du voisinage (par exemple le nombre de modes « intra » sélectionnés dans le voisinage, ...) ;
- la binarisation : une mise sous la forme d'une suite de bits des symboles à coder est réalisée. Par la suite, ces différents bits sont envoyés successivement au codeur entropique binaire.

Ainsi, ce codeur entropique met en œuvre, pour chaque contexte utilisé, un système d'apprentissage des probabilités à la volée par rapport aux symboles précédemment codés pour le contexte considéré. Cet apprentissage est basé sur l'ordre de codage de ces symboles. Typiquement, l'image est parcourue selon un ordre de type « raster-scan », décrit ci-dessus.

Lors du codage d'un symbole *b* donné pouvant valoir 0 ou 1, l'apprentissage de la probabilité $P_i$ d'apparition de ce symbole est mis à jour pour un bloc courant $MB_i$ de la façon suivante:

$$p_i(b=0) = \alpha \cdot p_{i-1}(b=0) + \begin{cases} (1-\alpha) & \text{si bit codé est 0} \\ 0 & \text{sinon} \end{cases}$$

où $\alpha$ est une valeur prédéterminée, par exemple 0.95 et $P_{i-1}$ est la probabilité d'apparition de symbole calculée lors de la dernière apparition de ce symbole.

Un exemple schématique d'un tel codage entropique est représenté à la **figure 1A,** dans laquelle un bloc courant $MB_i$ de l'image $I_N$ est soumis à un codage entropique. Lorsque le codage entropique du bloc $MB_i$ commence, les probabilités d'apparition de symboles utilisées sont celles obtenues après codage d'un bloc précédemment codé et décodé, qui est celui qui précède immédiatement le bloc courant MB$_i$ conformément au parcours ligne par ligne des blocs de type « raster scan » précité. Un tel apprentissage basé sur la dépendance bloc à bloc est représenté sur la **figure 1A** pour certains blocs seulement dans un souci de clarté de la figure, par les flèches en trait fin.

L'inconvénient d'un tel type de codage entropique réside dans le fait que lors du codage d'un symbole se situant en début d'une ligne, les probabilités utilisées correspondent principalement à celles observées pour les symboles se situant en fin de la ligne précédente, compte tenu du parcours « raster scan » des blocs. Or, du fait de la possible variation spatiale des probabilités des symboles (par exemple pour un symbole lié à une information de mouvement, le mouvement situé sur la partie droite d'une image peut être différent de celui observé sur la partie gauche et donc de même pour les probabilités locales en découlant), un manque d'adéquation locale des probabilités peut être observé, ce qui risque d'entraîner une perte en efficacité lors du codage.

Le document « Annex A : CDCM Video Codec Decoder Spécification » disponible à l'adresse internet http://wftp3.itu.int/av-arch/jctvc-site/2010 04 A Dresden/JCTVC-A114-AnnexA.doc (au 8 février 2011) décrit un procédé de codage qui pallie l'inconvénient mentionné précédemment. Le procédé de codage décrit dans le document ci-dessus comprend, comme illustré sur la **figure 1B** :

- une étape de découpage d'une image I$_N$ en une pluralité de blocs,
- une étape de codage prédictif d'un bloc courant MB$_i$ de cette image par rapport à un nombre prédéterminé de trois blocs MBr$_1$, MBr$_2$ et MBr$_3$ précédemment codés et décodés, tels que désignés par les flèches grisées. Les trois blocs précités comprennent spécifiquement le bloc MBr$_1$ situé immédiatement à gauche du bloc courant MB$_i$, et les deux blocs MBr$_2$ et MBr$_3$ situés respectivement immédiatement au-dessus et à droite au-dessus du bloc courant MB$_i$,
- une étape de codage entropique des blocs de l'image I$_N$, selon laquelle chaque bloc utilise les probabilités d'apparition de symbole calculées respectivement pour le bloc codé et décodé qui est situé immédiatement au dessus du bloc courant et pour le bloc codé et décodé qui est situé immédiatement à gauche du bloc courant, lorsque ces blocs sont disponibles. Cette utilisation des probabilités d'apparition de symbole est représenté partiellement sur la **figure 1B,** dans un souci de clarté de cette dernière, par les flèches en trait fin.

L'avantage d'un tel codage entropique est qu'il tire partie des probabilités issues de l'environnement immédiat du bloc courant, ce qui permet d'atteindre des performances de codage plus élevée. En outre, la technique de codage utilisée permet de coder en parallèle un nombre prédéterminé de sous-ensembles de blocs voisins deux à deux. Dans l'exemple représenté sur la **figure 1B,** trois sous-ensembles SE1, SE2 et SE3 sont codés en parallèle, chaque sous-ensemble étant constitué dans cet exemple d'une ligne de blocs représentée en traits pointillés. Bien entendu, un tel codage nécessite que les blocs situés respectivement au-dessus et au-dessus à droite du bloc courant soient disponibles.

Un inconvénient de cette technique de codage en parallèle est que, pour permettre l'accès à une probabilité d'apparition de symbole calculée pour le bloc situé immédiatement au dessus du bloc courant, il est nécessaire de stocker une quantité de probabilités associées à une ligne de blocs. Si on considère par exemple la deuxième ligne de blocs SE2 sur la **figure 1B,** le premier bloc de cette ligne est soumis à un codage entropique par utilisation des probabilités d'apparition de symbole calculées pour le premier bloc de la première ligne précédente SE1. A l'issue du codage du premier bloc de la deuxième ligne, l'état de la valeur V1 de probabilité d'apparition est stocké dans une mémoire tampon MT. Le second bloc de la deuxième ligne SE2 est ensuite soumis à un codage entropique par utilisation des probabilités d'apparition de symbole calculées à la fois pour le deuxième bloc de la première ligne SE1 et le premier bloc de la deuxième ligne SE2. A l'issue du codage du deuxième bloc de la deuxième ligne, l'état de la valeur V2 de probabilité d'apparition est stocké dans la mémoire tampon MT. Il est procédé de cette façon jusqu'au dernier bloc de la deuxième ligne SE2. Comme les probabilités se trouvent en très grande quantité (il existe autant de probabilités que la combinaison du nombre d'éléments de syntaxe avec le nombre de contextes associés), le stockage de ces probabilités sur une ligne entière est couteux en termes de ressources mémoire.

Objet et résumé de l'invention

Un des buts de l'invention est de remédier à des inconvénients de l'état de la technique précité.

A cet effet, un objet de la présente invention concerne un procédé de codage d'au moins une image comprenant les étapes de :

- découpage de l'image en une pluralité de blocs,
- regroupement des blocs en un nombre prédéterminé de sous-ensembles de blocs,
- codage en parallèle de chacun desdits sous-ensembles de blocs, les blocs d'un sous-ensemble considéré étant codés selon un ordre de parcours séquentiel prédéterminé, ladite étape de codage comprenant, pour un bloc courant d'un sous-ensemble considéré, les sous-étapes de :

  • codage prédictif du bloc courant par rapport à au moins un bloc précédemment codé et décodé,
  • codage entropique du bloc courant par apprentissage d'au moins une probabilité d'apparition de symbole.

Le procédé selon l'invention est remarquable en ce que :

- dans le cas où le bloc courant est le premier bloc à coder d'un sous-ensemble considéré, la probabilité d'apparition de symbole est celle qui a été calculée pour un bloc prédéterminé codé et décodé d'au moins un autre sous-ensemble,
- dans le cas où le bloc courant est un bloc du sous-ensemble considéré, autre que le premier bloc, la probabilité d'apparition de symbole est celle qui a été calculée pour au moins un bloc codé et décodé appartenant au même sous-ensemble.

Une telle disposition permet de stocker dans la mémoire tampon du codeur une quantité beaucoup moins élevée de probabilités d'apparition de symboles, puisque le codage entropique d'un bloc courant autre que le premier bloc d'un sous-ensemble de blocs ne nécessite plus obligatoirement l'utilisation des probabilités d'apparition de symbole calculées pour un bloc précédemment codé et décodé qui est situé au dessus de bloc courant dans un autre sous-ensemble.

Une telle disposition permet en outre de maintenir les performances de compression existantes, puisque le codage entropique d'un bloc courant utilise des probabilités d'apparition de symbole calculées pour un autre bloc précédemment codé et décodé du sous-ensemble auquel appartient le bloc courant, et que par conséquent un apprentissage a déjà été réalisé à travers la mise à jour des probabilités pour que ces dernières soient conformes à la statistique du signal vidéo.

L'utilisation des probabilités d'apparition de symbole calculées pour le premier bloc dudit autre sous-ensemble lors du codage entropique du premier bloc courant d'un sous-ensemble de blocs considéré a principalement pour avantage d'économiser la mémoire tampon du codeur en stockant dans cette dernière uniquement la mise à jour desdites probabilités d'apparition de symboles, sans prendre en compte les probabilités d'apparition de symboles apprises par les autres blocs consécutifs dudit autre sous-ensemble.

L'utilisation des probabilités d'apparition de symbole calculées pour un bloc dudit autre sous-ensemble, autre que le premier bloc, par exemple le deuxième bloc, lors du codage entropique du premier bloc courant d'un sous-ensemble de blocs considéré a principalement pour avantage l'obtention d'un apprentissage plus précis et donc meilleur des probabilités d'apparition de symboles, ce qui entraîne de meilleures performances de compression vidéo.

Dans un mode de réalisation particulier, le bloc codé et décodé appartenant au même sous-ensemble que le bloc courant à coder autre que le premier bloc du sous-ensemble est celui qui est le plus proche voisin du bloc courant à coder.

Une telle disposition permet ainsi de stocker uniquement les probabilités d'apparition de symboles apprises lors du codage entropique d'un premier bloc d'un sous-ensemble considéré, puisque dans ce cas particulier, il est seulement tenu compte de la probabilité d'apparition de symboles calculée pour le bloc situé au-dessus du premier bloc courant et appartenant à un autre sous-ensemble. Il en résulte une optimisation de la réduction de la taille des ressources mémoire du codeur.

Dans un autre mode de réalisation particulier, dans le cas où le codage prédictif d'un bloc d'un sous-ensemble considéré est destiné à être effectué par rapport à un nombre prédéterminé de blocs précédemment codés et décodés d'un autre sous-ensemble que ledit sous-ensemble considéré, le codage en parallèle des blocs dudit sous-ensemble considéré est effectué avec un décalage dudit nombre prédéterminé de blocs par rapport au sous-ensemble de blocs immédiatement précédent dans l'ordre où le codage en parallèle est effectué.

Une telle disposition permet la réalisation, pour un sous-ensemble courant de blocs à coder, une synchronisation de l'avancée de traitement des blocs du sous-ensemble de blocs précédent le sous-ensemble courant dans l'ordre où est effectuée le codage en parallèle, ce qui permet de garantir la disponibilité du ou des blocs du sous-ensemble précédent qui sont utilisés pour le codage d'un bloc courant. De cette façon, l'étape de vérification de la disponibilité de ce ou ces blocs du sous-ensemble précédent, telle que mise en œuvre dans les codeurs parallèle de l'art antérieur, peut avantageusement être omise, ce qui permet une accélération du temps de traitement des blocs dans le codeur selon l'invention.

Corrélativement, l'invention concerne encore un dispositif de codage d'au moins une image comprenant :

- des moyens de découpage de l'image en une pluralité de blocs,
- des moyens de regroupement des blocs en un nombre prédéterminé de sous-ensembles de blocs,
- des moyens de codage en parallèle de chacun des sous-ensembles de blocs, les blocs d'un sous-ensemble considéré étant codés selon un ordre de parcours séquentiel prédéterminé, les moyens de codage comprenant, pour un bloc courant d'un sous-ensemble considéré :

    • des sous-moyens de codage prédictif du bloc courant par rapport à au moins un bloc précédemment codé et décodé,
    • des sous-moyens de codage entropique du bloc courant à partir d'au moins une probabilité d'apparition de symbole.

Un tel dispositif de codage est remarquable en ce que :

- dans le cas où le bloc courant est le premier bloc à coder d'un sous-ensemble considéré, les sous-moyens de codage entropique tiennent compte, pour le codage entropique du premier bloc courant, de la probabilité d'apparition de symbole qui a été calculée pour un bloc prédéterminé codé et décodé d'au moins un autre sous-ensemble,
- dans le cas où le bloc courant est un bloc du sous-ensemble considéré, autre que le premier bloc de ce dernier, les sous-moyens de codage entropique tiennent compte, pour le codage entropique du bloc courant, de la probabilité d'apparition de symbole qui a été calculée pour au moins un bloc codé et décodé appartenant au même sous-ensemble.

De façon correspondante, l'invention concerne aussi un procédé de décodage d'un flux représentatif d'au moins une image codée, comprenant les étapes de :

- identification dans l'image d'un nombre prédéterminé de sous-ensembles de blocs à décoder,
- décodage en parallèle de parties du flux associées à chacun des sous-ensembles de blocs, les blocs d'un sous-ensemble considéré étant décodés selon un ordre de parcours séquentiel prédéterminé, l'étape de décodage comprenant, pour un bloc courant d'un sous-ensemble considéré, les sous-étapes de :

    • décodage entropique du bloc courant à partir d'au moins une probabilité d'apparition de symbole
    • décodage prédictif du bloc courant par rapport à au moins un bloc précédemment décodé.

Un tel procédé de décodage est remarquable en ce que :

- dans le cas où le bloc courant est le premier bloc à décoder d'un sous-ensemble considéré, la probabilité d'apparition de symbole est celle qui a été calculée pour un bloc prédéterminé décodé d'au moins un autre sous-ensemble,
- dans le cas où le bloc courant est un bloc du sous-ensemble considéré, autre que le premier bloc de ce dernier, la probabilité d'apparition de symbole est celle qui a été calculée pour au moins un bloc décodé appartenant au même sous-ensemble.

Dans un mode de réalisation particulier, le bloc décodé appartenant au même sous-ensemble que le bloc courant à décoder autre que le premier bloc du sous-ensemble est celui qui est le plus proche voisin du bloc courant à décoder.

Dans un autre mode de réalisation particulier, dans le cas où le décodage prédictif d'un bloc d'un sous-ensemble considéré est destiné à être effectué par rapport à un nombre prédéterminé de blocs précédemment codés et décodés d'un autre sous-ensemble que le sous-ensemble considéré, le décodage en parallèle des blocs du sous-ensemble considéré est effectué avec un décalage du nombre prédéterminé de blocs par rapport au sous-ensemble de blocs immédiatement précédent dans l'ordre où le décodage en parallèle est effectué.

Corrélativement, l'invention concerne encore un dispositif de décodage d'un flux représentatif d'au moins une image codée, comprenant :

- des moyens d'identification dans l'image d'un nombre prédéterminé de sous-ensembles de blocs à décoder,
- des moyens de décodage en parallèle de parties du flux associées à chacun des sous-ensembles de blocs, les blocs d'un sous-ensemble considéré étant décodés selon un ordre de parcours séquentiel prédéterminé, les moyens de décodage comprenant, pour un bloc courant d'un sous-ensemble considéré :

    • des sous-moyens de décodage entropique du bloc courant à partir d'au moins une probabilité d'apparition de symbole,
    • des sous-moyens de décodage prédictif du bloc courant par rapport à au moins un bloc précédemment décodé.

Un tel dispositif de décodage est remarquable en ce que :

- dans le cas où le bloc courant est le premier bloc à décoder d'un sous-ensemble considéré, les sous-moyens de décodage entropique tiennent compte, pour le décodage entropique du premier bloc courant, de la probabilité d'apparition de symbole qui a été calculée pour un bloc prédéterminé décodé d'au moins un autre sous-ensemble,
- dans le cas où le bloc courant est un bloc du sous-ensemble considéré, autre que le premier bloc de ce dernier, les sous-moyens de décodage entropique tiennent compte, pour le décodage entropique du bloc courant, de la probabilité d'apparition de symbole qui a été calculée pour au moins un bloc décodé appartenant au même sous-ensemble.

L'invention vise également un programme d'ordinateur comportant des instructions pour l'exécution des étapes du procédé de codage ou de décodage ci-dessus, lorsque le programme est exécuté par un ordinateur.

Un tel programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Encore un autre objet de l'invention vise aussi un support d'enregistrement lisible par un ordinateur, et comportant des instructions de programme d'ordinateur tel que mentionné ci-dessus.

Le support d'enregistrement peut être n'importe quelle entité ou dispositif capable de stocker le programme. Par exemple, un tel support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, un tel support d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, un tel support d'enregistrement peut être un circuit intégré dans lequel le programme est incorporé, le circuit étant adapté pour exécuter le procédé en question ou pour être utilisé dans l'exécution de ce dernier.

Le dispositif de codage, le procédé de décodage, le dispositif de décodage et les programmes d'ordinateur précités présentent au moins les mêmes avantages que ceux conférés par le procédé de codage selon la présente invention.

Brève description des dessins

D'autres caractéristiques et avantages apparaîtront à la lecture de deux modes de réalisation préférés décrits en référence aux figures dans lesquelles:

- la figure 1A représente un schéma de codage d'image de l'art antérieur selon un premier exemple,
- la figure 1B représente un schéma de codage d'image de l'art antérieur selon un deuxième exemple,
- la figure 2A représente les principales étapes du procédé de codage selon l'invention,
- la figure 2B représente en détail le codage parallèle mis en œuvre dans le procédé de codage de la figure 2A,
- la figure 3A représente un mode de réalisation d'un dispositif de codage selon l'invention,
- la figure 3B représente une unité de codage du dispositif de codage de la figure 3A,
- la figure 4A représente un schéma de codage/décodage d'image selon un premier mode de réalisation préférentiel,
- la figure 4B représente un schéma de codage/décodage d'image selon un deuxième mode de réalisation préférentiel,
- la figure 5A représente les principales étapes du procédé de décodage selon l'invention,
- la figure 5B représente en détail le codage parallèle mis en œuvre dans le procédé de décodage de la figure 5A,
- la figure 6A représente un mode de réalisation d'un dispositif de décodage selon l'invention,
- la figure 6B représente une unité de décodage du dispositif de décodage de la figure 6A.

Description détaillée d'un mode de réalisation de la partie codage

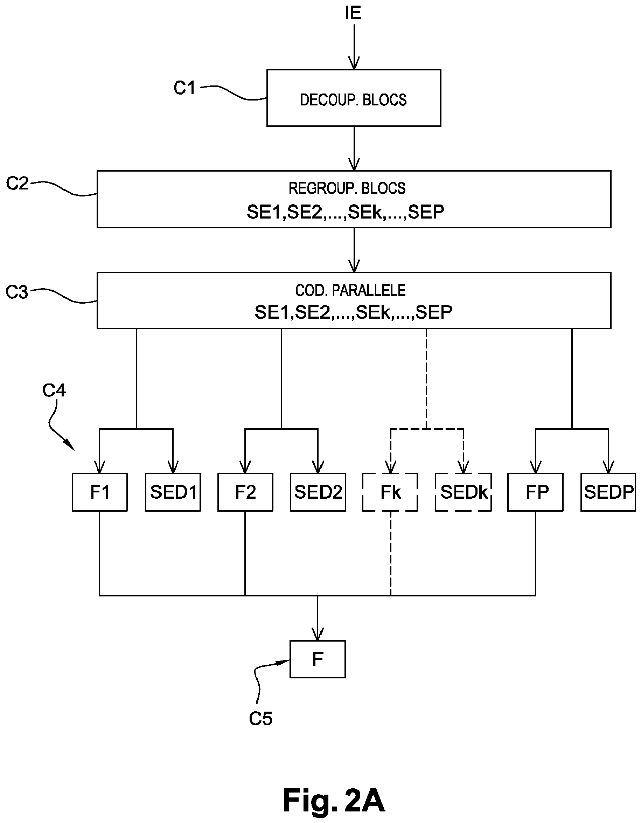

Un mode de réalisation de l'invention va maintenant être décrit, dans lequel le procédé de codage selon l'invention est utilisé pour coder une séquence d'images selon un flux binaire proche de celui qu'on obtient par un codage selon la norme H.264/MPEG-4 AVC. Dans ce mode de réalisation, le procédé de codage selon l'invention est par exemple implémenté de manière logicielle ou matérielle par modifications d'un codeur initialement conforme à la norme H.264/MPEG-4 AVC. Le procédé de codage selon l'invention est représenté sous la forme d'un algorithme comportant des étapes C1 à C5, représentées à la **figure 2A.**

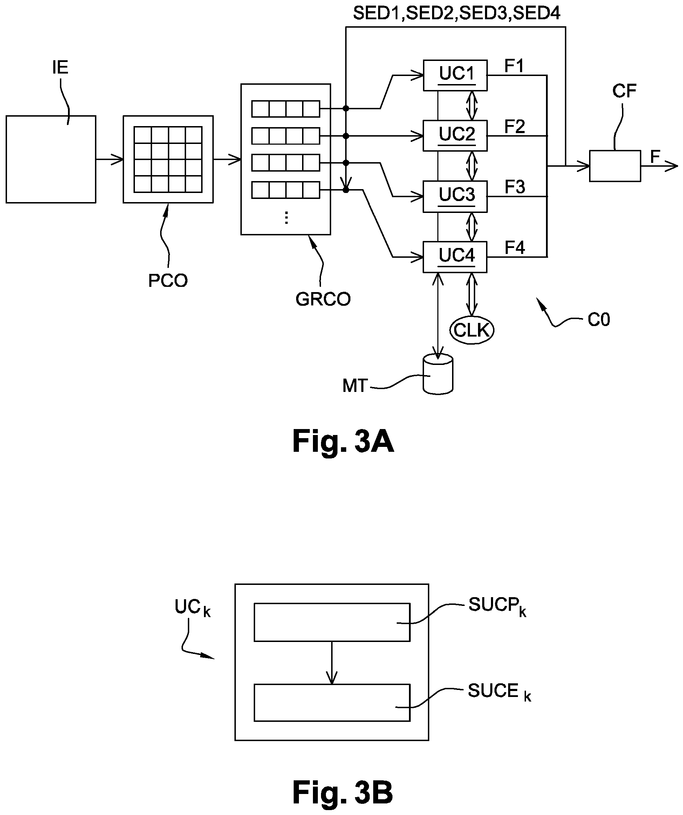

Selon le mode de réalisation de l'invention, le procédé de codage selon l'invention est implémenté dans un dispositif de codage CO représenté à la **figure 3A.**

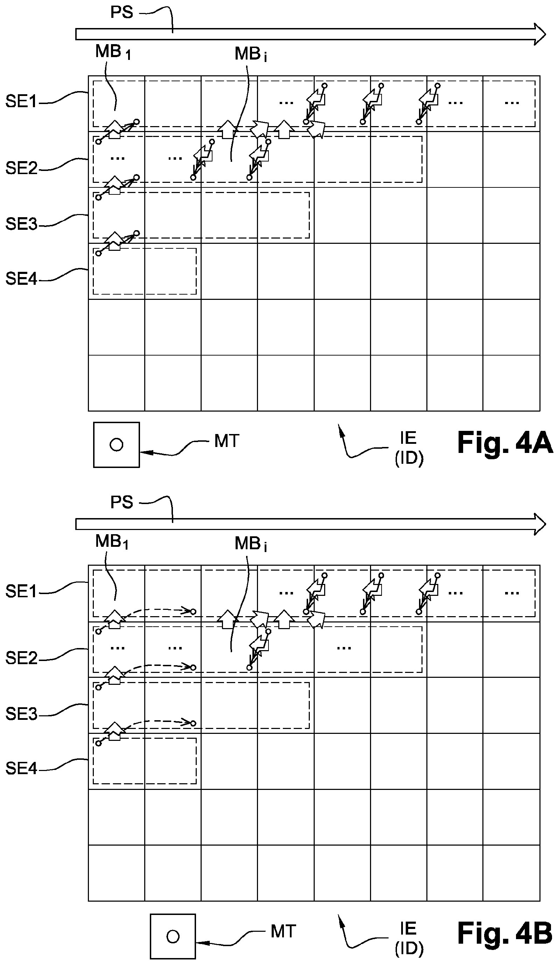

En référence à la **figure 2A,** la première étape de codage C1 est le découpage d'une image IE d'une séquence d'images à coder en une pluralité de blocs ou macro-blocs MB, comme représenté sur la **figure 4A** ou **4B.** Dans les exemples représentés, lesdits blocs MB ont une forme carrée et ont tous la même taille. En fonction de la taille de l'image qui n'est pas forcément un multiple de la taille des blocs, les derniers blocs à gauche et les derniers blocs en bas peuvent ne pas être carrés. Dans un mode alternatif de réalisation, les blocs peuvent être par exemple de taille rectangulaire et/ou non alignés les uns avec les autres.

Chaque bloc ou macrobloc peut par ailleurs être lui-même divisé en sous blocs qui sont eux-mêmes subdivisibles.

Un tel découpage est effectué par un module PCO de partitionnement représenté à la **figure 3A** qui utilise par exemple un algorithme de partitionnement bien connu en tant que tel.

En référence à la **figure 2A,** la deuxième étape de codage C2 est le regroupement des blocs précités en un nombre prédéterminé P de sous-ensembles de blocs consécutifs SE1, SE2,.., SEk,...,SEP destinés à être codés en parallèle. Dans les exemples représentés sur les **figures 4A** et **4B,** le nombre prédéterminé P est égal à 4 et les quatre sous-ensembles SE1, SE2, SE3, SE4, représentés en trait pointillé, sont constitués respectivement par les quatre premières lignes de blocs de l'image IE.

Un tel regroupement est effectué par un module de calcul GRCO représenté à la **figure 3A,** à l'aide d'un algorithme bien connu en soi.

En référence à la **figure 2A,** la troisième étape de codage C3 consiste dans le codage en parallèle de chacun desdits sous-ensembles de blocs SE1, SE2, SE3 et SE4, les blocs d'un sous-ensemble considéré étant codés selon un ordre de parcours séquentiel PS prédéterminé. Dans les exemples représentés sur les **figures 4A** et **4B,** les blocs d'un sous-ensemble SEk courant ($1 \leq k \leq 4$) sont codés les uns après les autres, de la gauche vers la droite, comme indiqué par la flèche PS.

Un tel codage en parallèle est mis en œuvre par un nombre R d'unités de codage UCk ($1 \leq k \leq R$) avec R=4 comme représenté sur la **figure 3A** et permet une accélération substantielle du procédé de codage. De façon connue en tant que telle, le codeur CO comprend une mémoire tampon MT qui est adaptée pour contenir les probabilités d'apparition de symboles telles que progressivement remises à jour au fur et à mesure du codage d'un bloc courant.

Comme représenté plus en détail sur la **figure 3B,** chacune des unités de codage UCk comprend :

- une sous-unité de codage prédictif d'un bloc courant par rapport à au moins un bloc précédemment codé et décodé, notée SUCPk ;
- une sous-unité de codage entropique dudit bloc courant par utilisation d'au moins une probabilité d'apparition de symbole calculée pour ledit bloc précédemment codé et décodé, notée SUCEk.

La sous-unité de codage prédictif SUCPk est apte à effectuer un codage prédictif du bloc courant, selon les techniques de prédiction classiques, telles que par exemple en mode Intra et/ou Inter.

La sous-unité de codage entropique SUCEk est quant à elle de type CABAC, mais modifiée selon la présente invention comme cela sera décrit plus loin dans la description.

En variante, la sous-unité de codage entropique SUCEk pourrait être un codeur de Huffman connu en tant que tel.

Dans les exemples représentés sur les **figures 4A** et **4B,** la première unité UC1 code les blocs de la première ligne SE1, de gauche à droite. Lorsqu'elle parvient au dernier bloc de la première ligne SE1, elle passe au premier bloc de la (N+1)$^{\text{ème}}$ ligne, ici la 5$^{\text{ième}}$ ligne, etc. La deuxième unité UC2 code les blocs de la deuxième ligne SE2, de gauche à droite. Lorsqu'elle parvient au dernier bloc de la deuxième ligne SE2, elle passe au premier bloc de la (N+2)$^{\text{ème}}$ ligne, ici la 6$^{\text{ième}}$ ligne, etc. Ce parcours se répète jusqu'à l'unité UC4, qui code les blocs de la quatrième ligne SE4, de gauche à droite. Lorsqu'elle parvient au dernier bloc de la première ligne, elle passe au premier bloc de la (N+4)$^{\text{ème}}$ ligne, ici la 8$^{\text{ième}}$ ligne, et ainsi de suite jusqu'à ce que le dernier bloc de l'image IE soit codé.

D'autres types de parcours que celui qui vient d'être décrit ci-dessus sont bien sûr possibles. Ainsi, il est possible de découper l'image IE en plusieurs sous-images et d'appliquer indépendamment un découpage de ce type sur chaque sous-image. Il est également possible pour chaque unité de codage de traiter non pas des lignes imbriquées, comme expliqué ci-dessus, mais des colonnes imbriquées. Il est également possible de parcourir les lignes ou colonnes dans un sens ou dans l'autre.

En référence à la **figure 2A,** la quatrième étape de codage C4 est la production de N sous-flux de bits Fk ($1 \leq k \leq N$) représentant les blocs traités compressés par chacune des unités de codage précitées, ainsi qu'une version décodée des blocs traités de chaque sous-ensemble SEk. Les blocs traités décodés d'un sous-ensemble considéré, notés SED1, SED2,..., SEDk,..., SEDP sont susceptibles d'être réutilisés par certaines des unités de codage UC1, UC2,..., UCk,..., UCP représentées sur la **figure 3A,** selon un mécanisme de synchronisation qui sera détaillé plus loin dans la description.

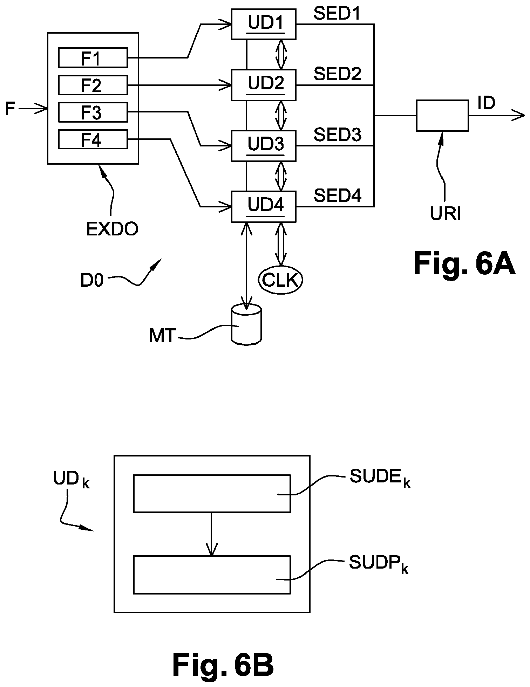

En référence à la **figure 2A,** la cinquième étape de codage C5 consiste à construire un flux global F à partir des sous-flux Fk précités. Selon un mode de réalisation, les sous-flux Fk sont simplement juxtaposés, avec une information additionnelle destinée à indiquer au décodeur l'emplacement de chaque sous-flux Fk dans le flux global F. Ce dernier est transmis par un réseau de communication (non représenté), à un terminal distant. Celui-ci comporte le décodeur DO représenté à la **figure 6A.**

Ainsi, comme cela sera décrit en détail plus loin dans la description, le décodeur selon l'invention est en mesure d'isoler les sous-flux Fk au sein du flux global F et de les affecter à chaque unité de décodage composant le décodeur. On notera qu'une telle décomposition des sous-flux en flux global est indépendante du choix de l'utilisation de plusieurs unités de codage fonctionnant en parallèle, et qu'il est possible avec cette approche d'avoir uniquement le codeur ou uniquement le décodeur qui comporte des unités fonctionnant en parallèle.

Une telle construction du flux global F est mise en œuvre dans un module CF de construction de flux, tel que représenté sur la **figure 3A.**

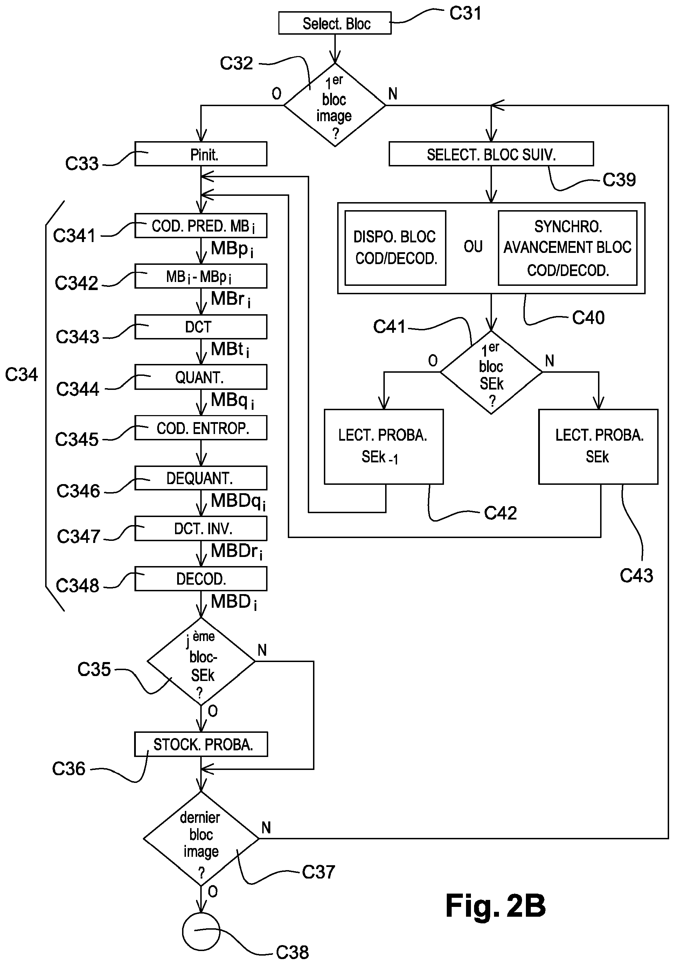

On va maintenant décrire, en référence à la **figure 2B,** les différentes sous-étapes spécifiques de l'invention, telles que mises en œuvre lors de l'étape C3 de codage en parallèle précitée, dans une unité de codage UCk.

Au cours d'une étape C31, l'unité de codage UCk sélectionne comme bloc courant le premier bloc à coder d'une ligne SEk courante représentée à la **figure 4A** ou **4B.**

Au cours d'une étape C32, l'unité UCk teste si le bloc courant est le premier bloc (situé en haut et à gauche) de l'image IE qui a été découpée en blocs à l'étape C1 précitée.

Si tel est le cas, au cours d'une étape C33, les probabilités de codage sont initialisées à des valeurs Pinit préalablement définies dans le codeur CO de la **figure 3A.**

Si tel n'est pas le cas, il est procédé, au cours d'une étape C40 qui sera décrite ultérieurement dans la suite de la description, à la détermination de la disponibilité des blocs précédemment codés et décodés nécessaires.

Au cours d'une étape C34, il est procédé au codage du premier bloc courant MB1 de la première ligne SE1 représentée sur la **figure 4A** ou **4B.** Une telle étape C34 comprend une pluralité de sous-étapes C341 à C348 qui vont être décrites ci-dessous.

Au cours d'une première sous-étape C341, il est procédé au codage prédictif du bloc courant MB1 par des techniques connues de prédiction intra et/ou inter, au cours duquel le bloc MB1 est prédit par rapport à au moins un bloc précédemment codé et décodé.

Il va de soi que d'autres modes de prédiction intra tels que proposé dans la norme H.264 sont possibles.

Le bloc courant MB1 peut être également soumis à un codage prédictif en mode inter, au cours duquel le bloc courant est prédit par rapport à un bloc issu d'une image précédemment codée et décodée. D'autres types de prédiction sont bien entendu envisageables. Parmi les prédictions possibles pour un bloc courant, la prédiction optimale est choisie selon un critère débit distorsion bien connu de l'homme du métier.

Ladite étape de codage prédictif précitée permet de construire un bloc prédit $MBp_1$ qui est une approximation du bloc courant $MB_1$. Les informations relatives à ce codage prédictif seront ultérieurement inscrites dans le flux F transmis au décodeur DO. De telles informations comprennent notamment le type de prédiction (inter ou intra), et le cas échéant, le mode de prédiction intra, le type de partitionnement d'un bloc ou macrobloc si ce dernier a été subdivisé, l'indice d'image de référence et le vecteur de déplacement utilisés dans le mode de prédiction inter. Ces informations sont compressées par le codeur CO.

Au cours d'une sous-étape suivante C342, il est procédé à la soustraction du bloc prédit $MBp_1$ du bloc courant $MB_1$ pour produire un bloc résidu $MBr_1$.

Au cours d'une sous-étape suivante C343, il est procédé à la transformation du bloc résidu $MBr_1$ selon une opération classique de transformation directe telle que par exemple une transformation en cosinus discrètes de type DCT, pour produire un bloc transformé $MBt_1$.

Au cours d'une sous-étape suivante C344, il est procédé à la quantification du bloc transformé MBti selon une opération classique de quantification, telle que par exemple une quantification scalaire. Un bloc de coefficients quantifiés $MBq_1$ est alors obtenu.

Au cours d'une sous-étape suivante C345, il est procédé au codage entropique du bloc de coefficients quantifiés $MBq_1$. Dans le mode préféré de réalisation, il s'agit d'un codage entropique CABAC.

Au cours d'une sous-étape suivante C346, il est procédé à la déquantification du bloc $MBq_1$ selon une opération classique de déquantification, qui est l'opération inverse de la quantification effectuée à l'étape C344. Un bloc de coefficients déquantifiés $MBDq_1$ est alors obtenu.

Au cours d'une sous-étape suivante C347, il est procédé à la transformation inverse du bloc de coefficients déquantifiés $MBDq_1$ qui est l'opération inverse de la transformation directe effectuée à l'étape C343 ci-dessus. Un bloc résidu décodé $MBDr_1$ est alors obtenu.

Au cours d'une sous-étape suivante C348, il est procédé à la construction du bloc décodé $MBD_1$ en ajoutant ou bloc prédit $MBp_1$ le bloc résidu décodé $MBDr_1$. Il est à noter que ce dernier bloc est le même que le bloc décodé obtenu à l'issue du procédé de décodage de l'image IE qui sera décrit plus loin dans la description. Le bloc décodé MBD, est ainsi rendu disponible pour être utilisé par l'unité de codage UC1 ou toute autre unité de codage faisant partie du nombre prédéterminé R d'unités de codage.

A l'issue de l'étape de codage C34 précitée, la sous-unité de codage entropique SUCEk telle que représentée à la **figure 3B** contient toutes les probabilités telles que progressivement remises à jour au fur et à mesure du codage du premier bloc. Ces probabilités correspondent aux différents éléments de syntaxes possibles et aux différents contextes de codage associés.

A la suite de l'étape de codage C34 précitée, il est testé, au cours d'une étape C35, si le bloc courant est le jème bloc de cette même ligne, où j est une valeur prédéterminée connue du codeur CO qui est au moins égale à 1.

Si tel est le cas, au cours d'une étape C36, l'ensemble des probabilités calculé pour le jème bloc est stocké dans la mémoire tampon MT du codeur CO telle que représentée à la **figure 3A** et aux **figures 4A** et **4B,** la taille de ladite mémoire étant adaptée à stocker le nombre de probabilités calculé.

Au cours d'une étape C37, l'unité UCk teste si le bloc courant de la ligne SEk qui vient d'être codé est le dernier bloc de l'image IE.

Si tel est le cas, au cours d'une étape C38, il est mis fin au procédé de codage.

Si tel n'est pas le cas, il est procédé, au cours de l'étape C39 à la sélection du bloc suivant $MB_i$ à coder conformément à l'ordre de parcours représenté par la flèche PS sur la **figure 4A** ou **4B.**

Si au cours de l'étape C35, le bloc courant n'est pas le jème bloc de la ligne SEk considérée, il est procédé à l'étape C37 ci-dessus.

Au cours d'une étape C40, il est procédé à la détermination de la disponibilité de blocs précédemment codés et décodés qui sont nécessaires pour coder le bloc courant $MB_i$. Compte tenu du fait qu'il s'agit d'un codage en parallèle des blocs de l'image IE par des unités de codage UCk différentes, il se peut que ces blocs n'aient pas été codés et décodés par l'unité de codage affectée au codage de ces blocs et qu'ils ne soient donc pas encore disponibles. Ladite étape de détermination consiste à vérifier si un nombre prédéterminé N' de blocs situés sur la ligne précédente SEk-1, par exemple les deux blocs situés respectivement au-dessus et au-dessus à droite du bloc courant, sont disponibles pour le codage du bloc courant, c'est-à-dire s'ils ont déjà été codés puis décodés par l'unité de codage UCk-1 affectée au codage de ces derniers. Ladite étape de détermination consiste également à vérifier la disponibilité d'au moins un bloc situé à gauche du bloc courant à coder MB$_i$. Toutefois, compte tenu de l'ordre de parcours PS choisi dans le mode de réalisation représenté sur la **figure 4A** ou **4B,** les blocs sont codés les un après les autres sur une ligne SEk considérée. En conséquence, le bloc codé et décodé de gauche est toujours disponible (à l'exception du premier bloc d'une ligne). Dans l'exemple représenté sur la **figure 4A** ou **4B,** il s'agit du bloc situé immédiatement à gauche du bloc courant à coder. A cet effet, seule est testée la disponibilité des deux blocs situés respectivement au-dessus et au-dessus à droite du bloc courant.

Cette étape de test étant susceptible de ralentir le procédé de codage, de façon alternative conformément à l'invention, une horloge CLK représentée sur la **figure 3A** est adaptée pour synchroniser l'avancée du codage des blocs de façon à garantir la disponibilité des deux blocs situés respectivement au-dessus et au-dessus à droite du bloc courant, sans qu'il soit nécessaire de vérifier la disponibilité de ces deux blocs. Ainsi, comme représenté à la **figure 4A** ou **4B,** une unité de codage UCk commence toujours à coder le premier bloc avec un décalage d'un nombre prédéterminé N' (ici N'=2) de blocs codés et décodés de la ligne précédente SEk-1 qui sont utilisés pour le codage du bloc courant. D'un point de vue logiciel, l'implémentation d'une telle horloge permet d'accélérer notablement le temps de traitement des blocs de l'image IE dans le codeur CO.

Au cours d'une étape C41, il est testé si le bloc courant est le premier bloc de la ligne SEk considérée.

Si tel est le cas, au cours d'une étape C42, il est procédé à la lecture dans la mémoire tampon MT uniquement des probabilités d'apparition de symboles calculées lors du codage du jème bloc de la ligne précédente SEk-1.

Selon une première variante représentée à la **figure 4A,** le jème bloc est le premier bloc de la ligne précédente SEk-1 (j=1). Une telle lecture consiste à remplacer les probabilités du codeur CABAC par celle présentes dans la mémoire tampon MT. S'agissant des premiers blocs respectifs des deuxième, troisième et quatrième lignes SE2, SE3 et SE4, cette étape de lecture est matérialisée sur la **figure 4A** par les flèches représentées en traits fins.

Selon une deuxième variante de l'étape C42 précitée qui est illustrée à la **figure 4B,** le jème bloc est le deuxième bloc de la ligne précédente SEk-1 (j=2). Une telle lecture consiste à remplacer les probabilités du codeur CABAC par celle présentes dans la mémoire tampon MT. S'agissant des premiers blocs respectifs des deuxième, troisième et quatrième lignes SE2, SE3 et SE4, cette étape de lecture est matérialisée sur la **figure 4B** par les flèches représentées en traits fins pointillés.

A la suite de l'étape C42, le bloc courant est codé puis décodé par itération des étapes C34 à C38 décrites plus haut.

Si à la suite de l'étape C41 précitée, le bloc courant n'est pas le premier bloc de la ligne SEk considérée, il n'est avantageusement pas procédé à la lecture des probabilités issues du bloc précédemment codé et décodé qui se trouve sur la même ligne SEk, c'est-à-dire le bloc codé et décodé situé immédiatement à gauche du bloc courant, dans l'exemple représenté. En effet, compte tenu du parcours de lecture séquentiel PS des blocs situés sur la même ligne, comme représenté sur la **figure 4A** ou **4B,** les probabilités d'apparition de symboles présentes dans le codeur CABAC au moment du commencement du codage du bloc courant sont exactement celle qui sont présentes après codage/décodage du bloc précédent sur cette même ligne.

En conséquence, au cours d'une étape C43, il est procédé à l'apprentissage des probabilités d'apparition de symbole pour le codage entropique dudit bloc courant, lesquelles correspondant uniquement à celles qui ont été calculées pour ledit bloc précédent sur la même ligne, comme représenté par les doubles flèches en traits pleins sur la **figure 4A** ou **4B.**

A la suite de l'étape C43, le bloc courant est codé puis décodé par itération des étapes C34 à C38 décrites plus haut.

Description détaillée d'un mode de réalisation de la partie décodage

Un mode de réalisation du procédé de décodage selon l'invention va maintenant être décrit, dans lequel le procédé de décodage est implémenté de manière logicielle ou matérielle par modifications d'un décodeur initialement conforme à la norme H.264/MPEG-4 AVC.

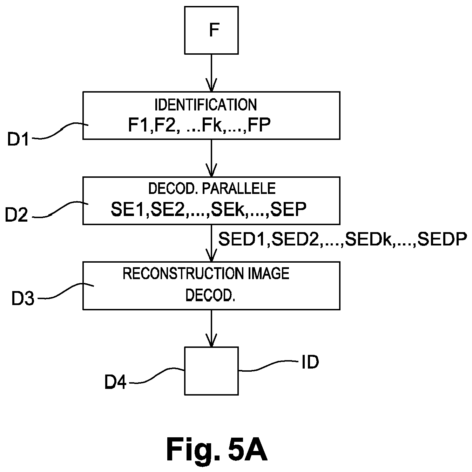

Le procédé de décodage selon l'invention est représenté sous la forme d'un algorithme comportant des étapes D1 à D4, représentées à la **figure 5A.**

Selon le mode de réalisation de l'invention, le procédé de décodage selon l'invention est implémenté dans un dispositif de décodage DO représenté à la **figure 6A.**

En référence à la **figure 5A,** la première étape de décodage D1 est l'identification dans ledit flux F des N sous-flux F1, F2,..., Fk,..., FP contenant respectivement les N sous-ensembles SE1, SE2,...,SEk,..., SEP de blocs ou macro-blocs MB codés précédemment, comme représenté sur la **figure 4A** ou **4B.** A cet effet, chaque sous-flux Fk dans le flux F est associé à un indicateur destiné à permettre au décodeur DO de déterminer l'emplacement de chaque sous-flux Fk dans le flux F. Dans l'exemple représenté, lesdits blocs MB ont une forme carrée et ont tous la même taille. En fonction de la taille de l'image qui n'est pas forcément un multiple de la taille des blocs, les derniers blocs à gauche et les derniers blocs en bas peuvent ne pas être carrés. Dans un mode alternatif de réalisation, les blocs peuvent être par exemple de taille rectangulaire et/ou non alignés les uns avec les autres.

Chaque bloc ou macrobloc peut par ailleurs être lui-même divisé en sous blocs qui sont eux-mêmes subdivisibles.

Une telle identification est effectuée par un module EXDO d'extraction de flux tel que représenté à la **figure 6A.**

Dans l'exemple représenté sur la **figure 4A** ou **4B,** le nombre prédéterminé est égal à 4 et les quatre sous-ensembles SE1, SE2, SE3, SE4 sont représentés en trait pointillé.

En référence à la **figure 5A,** la deuxième étape de décodage D2 est le décodage en parallèle de chacun desdits sous-ensembles de blocs SE1, SE2, SE3 et SE4, les blocs d'un sous-ensemble considéré étant codés selon un ordre de parcours séquentiel PS prédéterminé. Dans l'exemple représenté sur la **figure 4A** ou **4B,** les blocs d'un sous-ensemble SEk courant (1≤k≤4) sont décodés les uns après les autres, de la gauche vers la droite, comme indiqué par la flèche PS. A l'issue de l'étape D2, les sous-ensembles de blocs décodés SED1, SED2, SED3,...,SEDk,..., SEDP sont obtenus.

Un tel décodage en parallèle est mis en œuvre par un nombre R d'unités de décodage UDk (1≤k≤R) avec R=4 comme représenté sur la **figure 6A** et permet une accélération substantielle du procédé de décodage. De façon connue en tant que telle, le décodeur DO comprend une mémoire tampon MT qui est adaptée pour contenir les probabilités d'apparition de symboles telles que progressivement remises à jour au fur et à mesure du décodage d'un bloc courant.

Comme représenté plus en détail sur la **figure 6B,** chacune des unités de décodage UDk comprend :

- une sous-unité de décodage entropique dudit bloc courant par apprentissage d'au moins une probabilité d'apparition de symbole calculée pour au moins un bloc précédemment décodé, notée SUDEk,
- une sous-unité de décodage prédictif d'un bloc courant par rapport audit bloc précédemment décodé, notée SUDPk.

La sous-unité de décodage prédictif SUDPk est apte à effectuer un décodage prédictif du bloc courant, selon les techniques de prédiction classiques, telles que par exemple en mode Intra et/ou Inter.

La sous-unité de décodage entropique SUDEk est quant à elle de type CABAC, mais modifiée selon la présente invention comme cela sera décrit plus loin dans la description.

En variante, la sous-unité de décodage entropique SUDEk pourrait être un décodeur de Huffman connu en tant que tel.

Dans l'exemple représenté sur la **figure 4A** ou **4B,** la première unité UD1 décode les blocs de la première ligne SE1, de gauche à droite. Lorsqu'elle parvient au dernier bloc de la première ligne SE1, elle passe au premier bloc de la (N+1)ème ligne, ici la 5ième ligne, etc. La deuxième unité UC2 décode les blocs de la deuxième ligne SE2, de gauche à droite. Lorsqu'elle parvient au dernier bloc de la deuxième ligne SE2, elle passe au premier bloc de la (N+2)ème ligne, ici la 6ième ligne, etc. Ce parcours se répète jusqu'à l'unité UD4, qui décode les blocs de la quatrième ligne SE4, de gauche à droite. Lorsqu'elle parvient au dernier bloc de la première ligne, elle passe au premier bloc de la (N+4)ème ligne, ici la 8ième ligne, et ainsi de suite jusqu'à ce que le dernier bloc du dernier sous-flux identifié soit décodé.

D'autres types de parcours que celui qui vient d'être décrit ci-dessus sont bien sûr possibles. Par exemple, chaque unité de décodage pourrait traiter non pas des lignes imbriquées, comme expliqué ci-dessus, mais des colonnes imbriquées. Il est également possible de parcourir les lignes ou colonnes dans un sens ou dans l'autre.

En référence à la **figure 5A,** la troisième étape de décodage D3 est la reconstruction d'une image décodée à partir de chaque sous-ensemble décodé SED1, SED2,..., SEDk,..., SEDP obtenu à l'étape de décodage D2. Plus précisément, les blocs décodés de chaque sous-ensemble décodé SED1, SED2,..., SEDk,..., SEDP sont transmis à une unité URI de reconstruction d'image telle que représentée à la **figure 6A.** Au cours de cette étape D3, l'unité URI écrit les blocs décodés dans une image décodée au fur et à mesure que ces blocs deviennent disponibles.

Au cours d'une quatrième étape de décodage D4 représentée à la **figure 5A,** une image ID entièrement décodée est délivrée par l'unité URI représentée **figure 6A.**

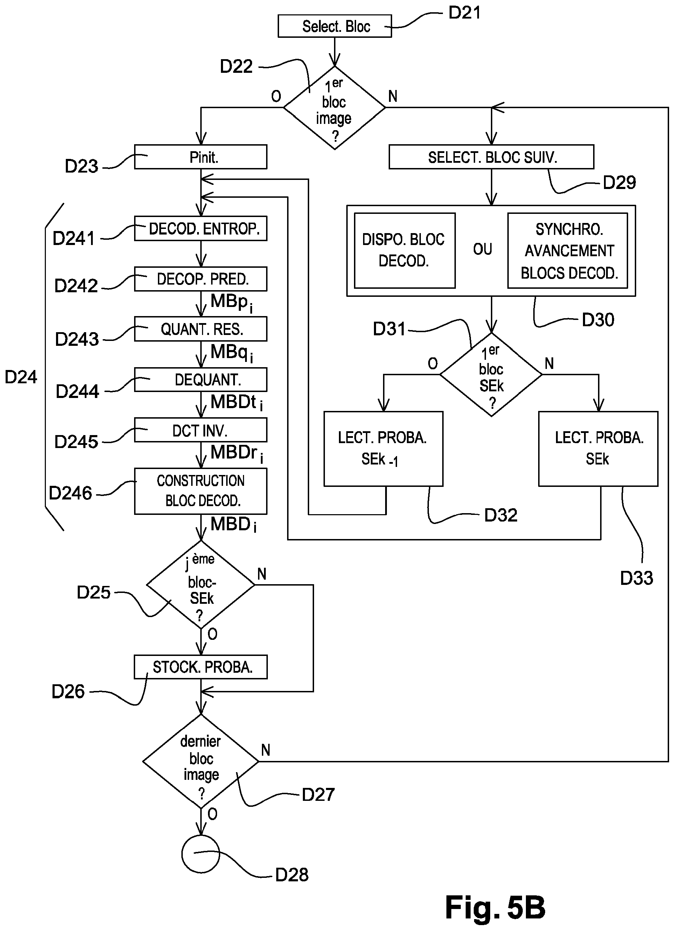

On va maintenant décrire, en référence à la **figure 5B,** les différentes sous-étapes spécifiques de l'invention, telles que mises en œuvre lors de l'étape D2 de décodage en parallèle précitée, dans une unité de décodage UDk.

Au cours d'une étape D21, l'unité de décodage UDk sélectionne comme bloc courant le premier bloc à décoder de la ligne SEk courante représentée à la **figure 4A** ou **4B.**

Au cours d'une étape D22, l'unité UDk teste si le bloc courant est le premier bloc de l'image décodée, en l'espèce le premier bloc du sous-flux F1.

Si tel est le cas, au cours d'une étape D23, les probabilités de décodage sont initialisées à des valeurs Pinit préalablement définies dans le décodeur DO de la **figure 6A.**

Si tel n'est pas le cas, il est procédé, au cours d'une étape D30 qui sera décrite ultérieurement dans la suite de la description, à la détermination de la disponibilité des blocs précédemment décodés nécessaires.

Au cours d'une étape D24, il est procédé au décodage du premier bloc courant MB1 de la première ligne SE1 représentée sur la **figure 4A** ou **4B.** Une telle étape D24 comprend une pluralité de sous-étapes D241 à D246 qui vont être décrites ci-dessous.

Au cours d'une première sous-étape D241, il est procédé au décodage entropique des éléments de syntaxe liés au bloc courant. Plus précisément, les éléments de syntaxe liés au bloc courant sont décodés par la sous-unité SUDE1 de décodage entropique CABAC telle que représentée à la **figure 6B**. Cette dernière décode le sous-flux de bits F1 du fichier compressé pour produire les éléments de syntaxe, et, en même temps, remet à jour ses probabilités de façon à ce que, au moment où celle-ci décode un symbole, les probabilités d'apparition de ce symbole soient identiques à celles obtenues lors du codage de ce même symbole lors de l'étape de codage entropique précitée C345.

Au cours d'une sous-étape suivante D242, il est procédé au décodage prédictif du bloc courant MB1 par des techniques connues de prédiction intra et/ou inter, au cours duquel le bloc MB1 est prédit par rapport à au moins un bloc précédemment décodé.

Il va de soi que d'autres modes de prédiction intra tels que proposé dans la norme H.264 sont possibles.

Au cours de cette étape, le décodage prédictif est effectué à l'aide des éléments de syntaxe décodés à l'étape précédente et comprenant notamment le type de prédiction (inter ou intra), et le cas échéant, le mode de prédiction intra, le type de partitionnement d'un bloc ou macrobloc si ce dernier a été subdivisé, l'indice d'image de référence et le vecteur de déplacement utilisés dans le mode de prédiction inter.

Ladite étape de décodage prédictif précitée permet de construire un bloc prédit MBp$_1$.

Au cours d'une sous-étape suivante D243, il est procédé à la construction d'un bloc résidu quantifié MBq$_1$ à l'aide des éléments de syntaxe décodés précédemment.

Au cours d'une sous-étape suivante D244, il est procédé à la déquantification du bloc résidu quantifié MBq$_1$ selon une opération classique de déquantification qui est l'opération inverse de la quantification effectuée à l'étape C344 précitée, pour produire un bloc déquantifié décodé MBDt$_1$.

Au cours d'une sous-étape suivante D245, il est procédé à la transformation inverse du bloc déquantifiés MBDt$_1$ qui est l'opération inverse de la transformation directe effectuée à l'étape C343 ci-dessus. Un bloc résidu décodé MBDr$_1$ est alors obtenu.

Au cours d'une sous-étape suivante D246, il est procédé à la construction du bloc décodé MBD, en ajoutant ou bloc prédit MBp$_1$ le bloc résidu décodé MBDr$_1$. Le bloc décodé MBD$_1$ est ainsi rendu disponible pour être utilisé par l'unité de décodage UD1 ou toute autre unité de décodage faisant partie du nombre prédéterminé N d'unités de décodage.

A l'issue de l'étape de décodage D246 précitée, la sous-unité de décodage entropique SUDE1 telle que représentée à la **figure 6B** contient toutes les probabilités telles que progressivement remises à jour au fur et à mesure du décodage du premier bloc. Ces probabilités correspondent aux différents éléments de syntaxes possibles et aux différents contextes de décodage associés.

A la suite de l'étape de décodage D24 précitée, il est testé, au cours d'une étape D25, si le bloc courant est le jème bloc de cette même ligne, où j est une valeur prédéterminée connue du décodeur DO qui est au moins égale à 1.

Si tel est le cas, au cours d'une étape D26, l'ensemble des probabilités calculé pour le jème bloc est stocké dans la mémoire tampon MT du décodeur DO telle que représentée à la **figure 6A** et à la **figure 4A** ou **4B**, la taille de ladite mémoire étant adaptée à stocker le nombre de probabilités calculé.

Au cours d'une étape D27, l'unité UDk teste si le bloc courant qui vient d'être décodé est le dernier bloc du dernier sous-flux.

Si tel est le cas, au cours d'une étape D28, il est mis fin au procédé de décodage.

Si tel n'est pas le cas, il est procédé, au cours de l'étape D29 à la sélection du bloc suivant MB$_i$ à décoder conformément à l'ordre de parcours représenté par la flèche PS sur la **figure 4A** ou **4B.**

Si au cours de l'étape D25 précitée, le bloc courant n'est pas le jème bloc de la ligne SEDk considérée, il est procédé à l'étape D27 ci-dessus.

Au cours d'une étape D30 qui fait suite à l'étape D29 précitée,, il est procédé à la détermination de la disponibilité de blocs précédemment décodés qui sont nécessaires pour décoder le bloc courant MB$_i$. Compte tenu du fait qu'il s'agit d'un décodage en parallèle des blocs par des unités de décodage UDk différentes, il se peut que ces blocs n'aient pas été décodés par l'unité de décodage affectée au décodage de ces blocs et qu'ils ne soient donc pas encore disponibles. Ladite étape de détermination consiste à vérifier si un nombre prédéterminé N' de blocs situés sur la ligne précédente SEk-1, par exemple les deux blocs situés respectivement au-dessus et au-dessus à droite du bloc courant, sont disponibles pour le décodage du bloc courant, c'est-à-dire s'ils ont déjà été décodés par l'unité de décodage UDk-1 affectée au décodage de ces derniers. Ladite étape de détermination consiste également à vérifier la disponibilité d'au moins un bloc situé à gauche du bloc courant à décoder MB$_i$. Toutefois, compte tenu de l'ordre de parcours PS choisi dans le mode de réalisation représenté sur la **figure 4A** ou **4B,** les blocs sont décodés les un après les autres sur une ligne SEk considérée. En conséquence, le bloc décodé de gauche est toujours disponible (à l'exception du premier bloc d'une ligne). Dans l'exemple représenté sur la **figure 4A** ou **4B**, il s'agit du bloc situé immédiatement à gauche du bloc courant à décoder. A cet effet, seule est testée la disponibilité des deux blocs situés respectivement au-dessus et au-dessus à droite du bloc courant.

Cette étape de test étant susceptible de ralentir le procédé de décodage, de façon alternative conformément à l'invention, une horloge CLK représentée sur la **figure 6A** est adaptée pour synchroniser l'avancée du décodage des blocs de façon à garantir la disponibilité des deux blocs situés respectivement au-dessus et au-dessus à droite du bloc courant, sans qu'il soit nécessaire de vérifier la disponibilité de ces deux blocs. Ainsi, comme représenté à la **figure 4A** ou **4B,** une unité de décodage UDk commence toujours à décoder le premier bloc avec un décalage d'un nombre prédéterminé N' (ici N'=2) de blocs décodés de la ligne précédente SEk-1 qui sont utilisés pour le décodage du bloc courant. D'un point de vue logiciel, l'implémentation d'une telle horloge permet d'accélérer notablement le temps de traitement des blocs de chaque sous-ensemble SEk dans le décodeur DO.

Au cours d'une étape D31, il est testé si le bloc courant est le premier bloc de la ligne SEk considérée.

Si tel est le cas, au cours d'une étape D32, il est procédé à la lecture dans la mémoire tampon MT uniquement des probabilités d'apparition de symboles calculées lors du décodage du jème bloc de la ligne précédente SEk-1.

Selon une première variante représentée à la **figure 4A,** le jème bloc est le premier bloc de la ligne précédente SEk-1 (j=1) Une telle lecture consiste à remplacer les probabilités du décodeur CABAC par celle présentes dans la mémoire tampon MT. S'agissant des premiers blocs respectifs des deuxième, troisième et quatrième lignes SE2, SE3 et SE4, cette étape de lecture est matérialisée sur la **figure 4A** par les flèches représentées en traits fins.

Selon une deuxième variante de l'étape D32 précitée qui est illustrée à la **figure 4B,** le jème bloc est le deuxième bloc de la ligne précédente SEk-1 (j=2). Une telle lecture consiste à remplacer les probabilités du décodeur CABAC par celle présentes dans la mémoire tampon MT. S'agissant des premiers blocs respectifs des deuxième, troisième et quatrième lignes SE2, SE3 et SE4, cette étape de lecture est matérialisée sur la **figure 4B** par les flèches représentées en traits fins pointillés.

A la suite de l'étape D32, le bloc courant est décodé par itération des étapes D24 à D28 décrites plus haut.

Si à la suite de l'étape D31 précitée, le bloc courant n'est pas le premier bloc de la ligne SEk considérée, il n'est avantageusement pas procédé à la lecture des probabilités issues du bloc précédemment décodé qui se trouve sur la même ligne SEk, c'est-à-dire le bloc décodé situé immédiatement à gauche du bloc courant, dans l'exemple représenté. En effet, compte tenu du parcours de lecture séquentiel PS des blocs situés sur la même ligne, comme représenté sur la **figure 4A** ou **4B,** les probabilités d'apparition de symboles présentes dans le décodeur CABAC au moment du commencement du décodage du bloc courant sont exactement celle qui sont présentes après décodage du bloc précédent sur cette même ligne.

En conséquence, au cours d'une étape D33, il est procédé à l'apprentissage des probabilités d'apparition de symbole pour le décodage entropique dudit bloc courant, lesquelles probabilités correspondant uniquement à celles qui ont été calculées pour ledit bloc précédent sur la même ligne, comme représenté par les doubles flèches en traits pleins sur la **figure 4A** ou **4B.**

A la suite de l'étape D33, le bloc courant est décodé par itération des étapes D24 à D28 décrites plus haut.

**Les modes de réalisation**

Bien que la présente invention soit définie dans les revendications jointes, il convient de préciser que celle-ci peut également (alternativement) être définie en accord avec les modes de réalisation suivants:

  1. Procédé de codage d'au moins une image comprenant les étapes de:

  - découpage (C1) de l'image en une pluralité de blocs (MB),
  - regroupement (C2) de blocs en un nombre prédéterminé (P) de sous-ensembles de blocs,
  - codage en parallèle (C3) de chacun desdits sous-ensembles de blocs, les blocs d'un sous-ensemble considéré étant codés selon un ordre de parcours séquentiel prédéterminé, ladite étape de codage comprenant, pour un bloc courant d'un sous-ensemble considéré, les sous-étapes de :

    • codage (C341) prédictif dudit bloc courant par rapport à au moins un bloc précédemment codé et décodé,
    • codage (C345) entropique dudit bloc courant à partir d'au moins une probabilité d'apparition de symbole,

  ledit procédé de codage étant caractérisé en ce que:

  - dans le cas où le bloc courant est le premier bloc à coder d'un sous-ensemble considéré, ladite probabilité d'apparition de symbole est celle qui a été calculée pour un bloc prédéterminé codé et décodé d'au moins un autre sous-ensemble,
  - dans le cas où le bloc courant est un bloc dudit sous-ensemble considéré, autre que ledit premier bloc, ladite probabilité d'apparition de symbole est celle qui a été calculée pour au moins un bloc codé et décodé appartenant audit même sous-ensemble.

  2. Procédé de codage selon le mode de réalisation 1 , au cours duquel ledit bloc codé et décodé appartenant au même sous-ensemble que le bloc courant à coder autre que le premier bloc dudit sous-ensemble est celui qui est le plus proche voisin du bloc courant à coder.

  3. Procédé de codage selon le mode de réalisation 1 , au cours duquel dans le cas où le codage prédictif d'un bloc d'un sous-ensemble considéré est destiné à être effectué par rapport à un nombre prédéterminé de blocs précédemment codés et décodés d'un autre sous-ensemble que ledit sous-ensemble considéré, le codage en parallèle des blocs dudit sous-ensemble considéré est effectué avec un décalage dudit nombre prédéterminé de blocs par rapport au sous-ensemble de blocs immédiatement précédent dans l'ordre où le codage en parallèle est effectué.

4. Dispositif de codage (CO) d'au moins une image comprenant:

- des moyens (PCO) de découpage de l'image en une pluralité de blocs (MB),
- des moyens (GRCO) de regroupement desdits blocs en un nombre prédéterminé (P) de sous-ensembles de blocs,
- des moyens (UC1, UC2, ...,UCk, ... UCP) de codage en parallèle de chacun desdits sous-ensembles de blocs, les blocs d'un sous-ensemble considéré étant codés selon un ordre de parcours séquentiel prédéterminé, lesdits moyens de codage comprenant, pour un bloc courant d'un sous-ensemble considéré :

    • des sous-moyens de codage prédictif dudit bloc courant par rapport à au moins un bloc précédemment codé et décodé,
    • des sous-moyens de codage entropique dudit bloc courant à partir d'au moins une probabilité d'apparition de symbole,

ledit dispositif de codage étant caractérisé en ce que:

- dans le cas où le bloc courant est le premier bloc à coder d'un sous-ensemble considéré, les sous-moyens de codage entropique tiennent compte, pour le codage entropique dudit premier bloc courant, de la probabilité d'apparition de symbole qui a été calculée pour un bloc prédéterminé codé et décodé d'au moins un autre sous-ensemble,
- dans le cas où le bloc courant est un bloc dudit sous-ensemble considéré, autre que ledit premier bloc de ce dernier, les sous-moyens de codage entropique tiennent compte, pour le codage entropique dudit bloc courant, de la probabilité d'apparition de symbole qui a été calculée pour au moins un bloc codé et décodé appartenant audit même sous-ensemble.

5. Programme d'ordinateur comportant des instructions pour mettre en œuvre le procédé de codage selon l'un quelconque **des modes de réalisation** 1 à 3, lorsqu'il est exécuté sur un ordinateur.

6. Support d'enregistrement lisible par un ordinateur sur lequel est enregistré un programme d'ordinateur comprenant des instructions pour l'exécution des étapes du procédé de codage selon l'un quelconque **des modes de réalisation** 1 à 3, lorsque ledit programme est exécuté par un ordinateur.

7. Procédé de décodage d'un flux (F) représentatif d'au moins une image codée, comprenant les étapes de:

- identification (D1) dans ladite image d'un nombre prédéterminé (P) de sous-ensembles de blocs à décoder,
- décodage (D2) en parallèle de parties dudit flux (F1, F2, ...,Fk, ..., FP) associées à chacun desdits sous-ensembles de blocs, les blocs d'un sous-ensemble considéré étant décodés selon un ordre de parcours séquentiel prédéterminé, ladite étape de décodage comprenant, pour un bloc courant d'un sous-ensemble considéré, les sous-étapes de:

    • décodage entropique (D241) dudit bloc courant à partir d'au moins une probabilité d'apparition de symbole,
    • décodage prédictif (D242) dudit bloc courant par rapport à au moins un bloc précédemment décodé,

ledit procédé de décodage étant caractérisé en ce que:

- dans le cas où le bloc courant est le premier bloc à décoder d'un sous-ensemble considéré, ladite probabilité d'apparition de symbole est celle qui a été calculée pour un bloc prédéterminé décodé d'au moins un autre sous-ensemble,
- dans le cas où le bloc courant est un bloc dudit sous-ensemble considéré, autre que ledit premier bloc de ce dernier, la probabilité d'apparition de symbole est celle qui a été calculée pour au moins un bloc décodé appartenant audit même sous-ensemble.

8. Procédé de décodage selon le mode de réalisation 7, au cours duquel ledit bloc décodé appartenant au même sous-ensemble que le bloc courant à décoder autre que le premier bloc dudit sous-ensemble est celui qui est le plus proche voisin du bloc courant à décoder.

9. Procédé de décodage selon le mode de réalisation 7, au cours duquel dans le cas où le décodage prédictif d'un bloc d'un sous-ensemble considéré est destiné à être effectué par rapport à un nombre prédéterminé de blocs précédemment décodés d'un autre sous-ensemble que ledit sous-ensemble considéré, le décodage en parallèle des blocs dudit sous-ensemble considéré est effectué avec un décalage dudit nombre prédéterminé de blocs par rapport au sous-ensemble de blocs immédiatement précédent dans l'ordre où le décodage en parallèle est effectué.

10. Dispositif (DO) de décodage d'un flux (F) représentatif d'au moins une image codée, comprenant:

- des moyens (EXDO) d'identification dans ladite image d'un nombre prédéterminé de sous-ensembles de blocs à décoder,
- des moyens (UD1 , UD2, ...,UDk, ... UDP) de décodage en parallèle de parties (F1, F2, ...,Fk, ..., FP) dudit flux associées à chacun desdits sous-ensembles de blocs, les blocs d'un sous-ensemble considéré étant décodés selon un ordre de parcours séquentiel prédéterminé, lesdits moyens de décodage comprenant, pour un bloc courant d'un sous-ensemble considéré :

  • des sous-moyens de décodage entropique dudit bloc courant à partir d'au moins une probabilité d'apparition de symbole,,
  • des sous-moyens de décodage prédictif dudit bloc courant par rapport à au moins un bloc précédemment décodé,

ledit dispositif de décodage étant caractérisé en ce que:

- dans le cas où le bloc courant est le premier bloc à décoder d'un sous-ensemble considéré, les sous-moyens de décodage entropique tiennent compte, pour le décodage entropique dudit premier bloc courant, de la probabilité d'apparition de symbole qui a été calculée pour un bloc prédéterminé décodé d'au moins un autre sous-ensemble,
- dans le cas où le bloc courant est un bloc dudit sous-ensemble considéré, autre que ledit premier bloc de ce dernier, les sous-moyens de décodage entropique tiennent compte, pour le décodage entropique dudit bloc courant, de la probabilité d'apparition de symbole qui a été calculée pour au moins un bloc décodé appartenant audit même sous-ensemble.

11. Programme d'ordinateur comportant des instructions pour mettre en œuvre le procédé de décodage selon l'un quelconque **des modes de réalisation** 7 à 9, lorsqu'il est exécuté sur un ordinateur.

12. Support d'enregistrement lisible par un ordinateur sur lequel est enregistré un programme d'ordinateur comprenant des instructions pour l'exécution des étapes du procédé de décodage selon l'un quelconque **des modes de réalisation** 7 à 9, lorsque ledit programme est exécuté par un ordinateur.

**Revendications**

1. Procédé de décodage d'un flux représentatif d'au moins une image codée, comprenant les étapes de:

   identification dans l'image d'une pluralité de sous-ensembles de blocs à être décodés, décodage de parties de flux associées à chacun des sous-ensembles de blocs, les blocs d'un sous-ensemble considérés étant décodés selon un ordre de parcours séquentiel prédéterminé, l'étape de décodage comprenant, pour un bloc courant d'un sous-ensemble considéré, les sous-étapes de:

   tester si le bloc courant est le premier bloc des sous-ensembles de blocs dans l'ordre de parcours;
   si le bloc courant est le premier bloc, le procédé comprend en outre:

   lecture dans une mémoire tampon d'une probabilité d'apparition de symbole qui a été calculée pour un bloc prédéterminé décodé d'au moins un autre sous-ensemble, le bloc prédéterminé étant deuxième dans l'ordre de parcours de l'autre sous-ensemble; et décodage entropique du premier bloc à partir de la probabilité d'apparition de symbole qui a été calculée pour le deuxième bloc dans l'ordre de parcours de l'autre sous-ensemble;

   si le bloc courant n'est pas le premier bloc du sous-ensemble, la probabilité d'apparition de symbole est celle qui a été calculée pour au moins un bloc décodé appartenant au même sous-ensemble;

   le procédé comprend en outre:

   décodage entropique du bloc courant à partir de la probabilité d'apparition de symbole d'au moins un bloc décodé appartenant au même sous-ensemble;
   tester si le bloc courant est le deuxième bloc du sous-ensemble de blocs dans l'ordre de parcours; et
   stocker les probabilités calculées pour le bloc courant dans la mémoire tampon du décodeur si le bloc courant est le deuxième bloc.

2. Procédé de décodage selon la revendication 1, dans lequel chaque sous-ensemble de blocs est une seule ligne de blocs dans l'image.

**3.** Procédé de décodage selon la revendication 2, dans lequel l'autre sous-ensemble est une ligne de blocs précédente dans l'image.

**4.** Procédé de décodage selon l'une quelconque des revendications 1 à 3, dans lequel au moins un bloc déjà décodé appartenant au même sous-ensemble précède directement le bloc courant dans l'ordre de parcours séquentiel prédéterminé.

MBr$_2$    MBr$_3$

I$_N$

MBr$_1$

MB$_i$

PRS

ART ANTERIEUR

# Fig. 1A

MBr$_2$

MBr$_3$

I$_N$

SE1

SE2

SE3

MB$_i$

MBr$_1$

MT

O$_{V1}$    O$_{V2}$    O$_{V3}$    O$_{V4}$    O$_{V5}$    O$_{V6}$    O$_{V7}$    O$_{V8}$

ART ANTERIEUR

# Fig. 1B

IE

C1 — DECOUP. BLOCS

C2 — REGROUP. BLOCS
SE1,SE2,...,SEk,...,SEP

C3 — COD. PARALLELE
SE1,SE2,...,SEk,...,SEP

C4

| F1 | SED1 | F2 | SED2 | Fk | SEDk | FP | SEDP |

F

C5

# Fig. 2A

Select. Bloc — C31

C32 —— 1er bloc image ? — O / N

C33 — Pinit.

SELECT. BLOC SUIV. —— C39

C341 — COD. PRED. MB $_i$
$MBp_i$

C342 — $MB_i - MBp_i$
$MBr_i$

C343 — DCT
$MBt_i$

C344 — QUANT.
$MBq_i$

C34

C345 — COD. ENTROP.

C346 — DEQUANT.
$MBDq_i$

C347 — DCT. INV.
$MBDr_i$

C348 — DECOD.
$MBD_i$

DISPO. BLOC COD/DECOD.    OU    SYNCHRO. AVANCEMENT BLOC COD/DECOD.

C41 —— 1er bloc SEk ? —— C40

O / N

LECT. PROBA. SEk -1

LECT. PROBA. SEk

C42

C43

C35 — j ème bloc-SEk ? — N / O

C36 — STOCK. PROBA.

C37 — dernier bloc image ? — N / O

C38

**Fig. 2B**

SED1,SED2,SED3,SED4

IE

PCO

GRCO

UC1  F1
UC2  F2
UC3  F3
UC4  F4

CF

F

CLK

MT

C0

**Fig. 3A**

$UC_k$

$SUCP_k$

$SUCE_k$

**Fig. 3B**

Fig. 4A

Fig. 4B

```
              ┌─────┐
              │  F  │
              └─────┘
                 │
                 ▼
      ┌────────────────────────┐
      │     IDENTIFICATION      │
D1 ───│    F1,F2, ...Fk,...,FP  │
      └────────────────────────┘
                 │
                 ▼
      ┌────────────────────────┐
      │     DECOD. PARALLELE    │
D2 ───│   SE1,SE2,...,SEk,...,SEP│
      └────────────────────────┘
              │  SED1,SED2,...,SEDk,...,SEDP
              ▼
      ┌────────────────────────┐
      │  RECONSTRUCTION IMAGE   │
D3 ───│        DECOD.           │
      └────────────────────────┘
                 │
                 ▼
              ┌─────┐
        D4 ───│     │─── ID
              └─────┘
```

# Fig. 5A

**Fig. 5B**

EP 3 716 623 A1

Fig. 6A

Fig. 6B

23

**EP 3 716 623 A1**

Europäisches Patentamt
European Patent Office
Office européen des brevets

## RAPPORT DE RECHERCHE EUROPEENNE

Numéro de la demande
EP 20 17 5631

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | Y-W HUANG ET AL: "Ordered Entropy Slices for Parallel CODEC", 38. VCEG MEETING; 89. MPEG MEETING; 1-7-2009 - 8-7-2009; LONDON, GENEVA; (VIDEO CODING EXPERTS GROUP OF ITU-T SG.16),, 5 juillet 2009 (2009-07-05), XP030003706, * abrégé; figures 1,2 * * sections 2.2-2.4, 3, 4 * ----- | 1-4 | INV. H04N19/13 H04N19/174 H04N19/184 H04N19/436 H04N19/61 |
| A | SZE (MIT) V: "Massively Parallel CABAC", 38. VCEG MEETING; 89. MPEG MEETING; 1-7-2009 - 8-7-2009; LONDON, GENEVA; (VIDEO CODING EXPERTS GROUP OF ITU-T SG.16),, 3 juillet 2009 (2009-07-03), XP030003702, * abrégé; figures 4, 5 * * section 2.2 * ----- | 1-4 | |
| X | WO 2010/063184 A1 (MEDIATEK INC [CN]; HUANG YU-WEN [CN]; GUO XUN [CN]) 10 juin 2010 (2010-06-10) * abrégé; revendication 9; figures 1-4, 9, 11 * * page 1, ligne 16 - page 3, ligne 5 * * page 5, ligne 13 - page 8, ligne 22 * * page 9, ligne 10 - page 10, ligne 10 * * page 11, ligne 28 - page 14, ligne 7 * ----- | 1-4 | DOMAINES TECHNIQUES RECHERCHES (IPC) H04N |
| A | SHARP: "Entropy slices for parallel entropy decoding", ITU-T SG16 MEETING; 22-4-2008 - 2-5-2008; GENEVA,, 14 avril 2008 (2008-04-14), XP030003821, * le document en entier * ----- -/-- | 1-4 | |

Le présent rapport a été établi pour toutes les revendications

| Lieu de la recherche | Date d'achèvement de la recherche | Examinateur |
|---|---|---|
| La Haye | 26 juin 2020 | Streich, Sebastian |

EPO FORM 1503 03.82 (P04C02)

page 1 de 2

Europäisches
Patentamt

European
Patent Office

Office européen
des brevets

**RAPPORT DE RECHERCHE EUROPEENNE**

Numéro de la demande

EP 20 17 5631

| | **DOCUMENTS CONSIDERES COMME PERTINENTS** | | |
|---|---|---|---|
| Catégorie | Citation du document avec indication, en cas de besoin, des parties pertinentes | Revendication concernée | CLASSEMENT DE LA DEMANDE (IPC) |
| A | MARPE D ET AL: "Context-Based Adaptive Binary Arithmetic Coding in the H.264/AVC Video Compression Standard", IEEE TRANSACTIONS ON CIRCUITS AND SYSTEMS FOR VIDEO TECHNOLOGY, IEEE SERVICE CENTER, PISCATAWAY, NJ, US, vol. 13, no. 7, 1 juillet 2003 (2003-07-01), pages 620-636, XP002509017, ISSN: 1051-8215, DOI: DOI:10.1109/TCSVT.2003.815173 * abrégé * * sections II.B et III.C * ----- | 1-4 | |
| | | | **DOMAINES TECHNIQUES RECHERCHES (IPC)** |

Le présent rapport a été établi pour toutes les revendications

| Lieu de la recherche | Date d'achèvement de la recherche | Examinateur |
|---|---|---|
| La Haye | 26 juin 2020 | Streich, Sebastian |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
..........................................................
& : membre de la même famille, document correspondant

EPO FORM 1503 03.82 (P04C02)

**EP 3 716 623 A1**

## ANNEXE AU RAPPORT DE RECHERCHE EUROPEENNE
### RELATIF A LA DEMANDE DE BREVET EUROPEEN NO.

EP 20 17 5631

26-06-2020

| Document brevet cité au rapport de recherche | Date de publication | Membre(s) de la famille de brevet(s) | Date de publication |
|---|---|---|---|
| WO 2010063184 A1 | 10-06-2010 | CN 101836454 A<br>TW 201023650 A<br>US 2013044806 A1<br>WO 2010063184 A1 | 15-09-2010<br>16-06-2010<br>21-02-2013<br>10-06-2010 |

EPO FORM P0460

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **J. RISSANEN ; G. G. LANGDON JR.** Universal modeling and coding. *IEEE Trans. Inform. Theory,* Janvier 1981, vol. IT-27, 12-23

- *Annex A : CDCM Video Codec Decoder Spécification,* 08 Février 2011, http://wftp3.itu.int/av-arch/jctvc-site/2010 04 A Dresden/JCTVC-A114-AnnexA.doc